# EUROPEAN PATENT APPLICATION

(11) **EP 2 444 436 A1**
(43) Date of publication of application: **25.04.2012**
(21) Application number: 10188293.4
(22) Date of filing: 20.10.2010
(51) Int. Cl.: C08G 18/68, C09D 175/16, C09D 167/08

(54) **Water-dilutable modified alkyd resin compositions**

(71) Applicant: Cytec Austria GmbH, 8402 Werndorf (AT)
(72) Inventor: Urbano, Edmund, Dr., 8044 Graz (AT)
(74) Representative: Deckers, Hellmuth Alexander

(57) **Abstract**

The invention relates to a water-dilutable alkyd resin composition **ABC,** comprising a urethane alkyd resin **AB** which is a reaction product of a hydroxyl group-containing alkyd resin **A** and an unsaturated isocyanate **B** wherein the amount of isocyanate **B** is sufficient to consume at least a part of the hydroxyl groups of the alkyd resin **A** under formation of a urethane group, and an emulsifier **C,** to a process for its preparation, and a method of use thereof.

## Description

The invention relates to water-dilutable modified alkyd resin compositions, to a process for their preparation, and a method of use thereof.

Urethane alkyd resin emulsions have been known from AT 369 774 B, which emulsions comprise a water-insoluble urethane alkyd having a low acid number, and an acrylic modified carrier resin as emulsifier. An oil length of about 50 % is the lower limit for the alkyd resins, as it has been shown that lower oil length alkyd resins were not amenable to be formulated to stable aqueous dispersions. Coating compositions formulated using these resins as binders did not lead to sufficient stability upon storage, and have a propensity to phase separation.

The compositions known from this prior art share a low drying speed, and low hardness due to their high oil length of more than 50 %, and the higher content in polyethylene glycol needed for emulsification.

Urethane alkyd resins according to AT 412 782 B have improved storage stability, but are still lacking in drying speed and hardness of the dried coating film.

It has therefore been the object of the invention to provide fast drying alkyd resins having an oil length of less than 40 % that can be emulsified in water without difficulties, and that have improved storage stability, drying speed and hardness compared with those resins known from the state of the art.

The present invention therefore relates to a water-dilutable alkyd resin composition **ABC,** comprising a urethane alkyd resin **AB** which is a reaction product of a hydroxyl group-containing alkyd resin **A** and an unsaturated isocyanate **B** wherein the amount of isocyanate **B** is sufficient to consume at least a part of the hydroxyl groups of the alkyd resin **A** under formation of a urethane group, and an emulsifier **C.**

The invention also relates to a process of making a water-dilutable alkyd resin composition **ABC** wherein in the first step, a hydroxyl group-containing alkyd resin **A** is made by reacting at least one unsaturated fatty acid **A1,** at least one aliphatic or aromatic or aromatic-aliphatic monocarboxylic acid **A2,** which are preferably branched, and which are further preferably free from olefinic unsaturation, linear or branched aliphatic, cycloaliphatic or aromatic acids **A3** which have at least two carboxylic acid groups, or anhydrides of these to the extent that these anhydrides exist, which may also have olefinic unsaturation in their molecules, and at least one at least trihydric alcohol **A4.** Kind and amount of the educts, or starting materials, **A1** through **A4** are chosen in a way that the resulting alkyd resin has a hydroxyl number of at least 5 mg/g. In another embodiment, the alkyd resin **A** may also be made by transesterification of an oil which is the ester of at least one preferably unsaturated fatty acid, and glycerol, with at least one of the acids **A2,** at least one of the acids **A3,** and preferably, also a further tri- or polyhydric alcohol **A4.** It is also possible to include in this transesterification alcohols **A5** that have two hydroxyl groups, and from two to forty carbon atoms, such as ethylene glycol, diethylene glycol, neopentyl glycol, 1,4-butane diol, and the dihydric reduction products of dimeric fatty acids. In this case, too, the hydroxyl number of the resulting alkyd resin should be at least 5 mg/g.

This hydroxyl group containing alkyd resin **A** is reacted in the second step with an unsaturated isocyanate **B,** wherein at least a part of the hydroxyl groups of the alkyd resin **A** is consumed by reaction with the unsaturated isocyanate **B** to form urethane groups. In the third step, an aqueous emulsion is formed by mixing the urethane alkyd resin **AB** and at least one emulsifier **C** with water under shear.

The invention further relates to a method of use of the said water-dilutable alkyd resin composition as binder for aqueous coating compositions, which method comprises forming an aqueous dispersion by emulsifying a mixture of the urethane alkyd resin **AB** and an emulsifier **C,** and dispersing this mixture in water, or by dispersing the urethane alkyd resin **AB** in a mixture of water and an emulsifier **C.**

In a preferred embodiment, the urethane alkyd resin **AB** alone is not water-dispersible or water-soluble.

A "water-dispersible" substance forms an emulsion or dispersion which does not show discrete particles or droplets to the naked eye, which emulsion or dispersion does not exhibit visible inhomogeneity or sedimentation after storage at rest for twenty-four hours at ambient temperature of 23 °C.

A "water-soluble" substance forms a clear solution or dispersion without any turbidity or opacity, or sediment detectable with the naked eye at a ratio of the mass of the substance to the mass of water of 1:9. Substances which do not meet this condition are referred to as "water-insoluble" in the context of this invention.

Components **A1** useful for the invention are fatty acids preferably having from ten to forty carbon atoms, particularly preferably from twelve to thirty carbon atoms, and on average at least one olefinic unsaturation, such as lauroleic acid, myristoleic acid, palmitoleic acid, petroselic acid, petroselaidic acid, oleic acid, elaidic acid, linolic acid, linoleic acid, linolelaidic acid, linolenelaidic acid, eleostearic acid, gadoleic acid, arachidonic acid, erucic acid, ricinoleic acid, brassylic acid, clupanodonic acid, linolenic acid, as well fatty acid mixtures which stem from natural sources such as linseed oil fatty acid, soybean oil fatty acid, peanut oil fatty acid, sun flower oil fatty acid (juvandolic fatty acid), rapeseed oil fatty acid, and isomerised natural fatty acid mixtures such as conjuvandolic fatty acid (conjugated sunflower oil fatty acid).

Components **A2** useful for the invention are aliphatic linear or branched monocarboxylic acids preferably having from eight to twenty carbon atoms such as 2-ethylhexanoic acid, 2,2-dimethyloctanoic acid, 3,5,5-trimethylhexanoic acid, versatic acid which is a mixture of alpha-branched decanoic acids, pivalic acid, myristic acid, palmitic acid, and stearic acid, aromatic monocarboxylic acids such as benzoic acid, and mixed aromatic-aliphatic monocarboxylic acids such as p-tert.-butylbenzoic acid and phenylacetic acid.

Components **A3** useful for the invention are preferably dicarboxylic linear, branched or monocyclic aliphatic acids and aromatic acids preferably having from four to forty carbon atoms such as succinic acid, adipic acid, suberic acid, dimeric fatty acids, 1,2-, 1,3- und 1,4-cyclohexane dicarboxylic acids, phthalic, isophthalic and terephthalic acids, as well as olefinically unsaturated acids such as tetrahydrophthalic acid, fumaric, and maleic acids, and anhydrides of these to the extent that they exist. It is also possible to use mixtures of dicarboxylic acids as mentioned together with minor amounts of tribasic or polybasic acids, such as the isomeric benzene tricarboxylic acids, or benzophenone tetracarboxylic acid, minor amount meaning here not more that a mass fraction of 20 % of all acids **A3.**

Components **A4** useful for the invention are preferably linear or branched aliphatic polyhydric alcohols having at least three carbon atoms such as trimethylolpropane, glycerol, and pentaerythritol, and also the so-called "sugar alcohols" erythritol, threitol, xylitol, arabitol, mannitol and sorbitol.

Components **B** useful for the invention are aromatic or aliphatic isocyanates having at least one isocyanate group and at least one olefinic unsaturation. Among the monounsaturated monoisocyanates, preference is given to isopropenyl dimethylbenzyl isocyanate, vinyl isocyanate, allyl isocyanate, methallyl isocyanate, (meth)acryloxyalkyl isocyanates such as methacryloxyethyl isocyanate and acryloxyethyl isocyanate, and the mono-isocyanate-functional reaction products of diisocyanates with monoesters of a dihydroxy compound with olefinically unsaturated carboxylic acids, particularly hydroxyalkyl (meth)acrylates, or with hydroxyalkyl (meth)allyl ethers, such as the reaction product of one molecule of toluylene diisocyanate with one molecule of a monoester of a dihydroxy compound with an olefinically unsaturated carboxylic acid, particularly hydroxyethyl (meth)acrylate, or with one molecule of hydroxyalkyl (meth)allyl ether. Useful compounds having two olefinic unsaturations and one isocyanate group are 1,1-bis-(meth)acryloxyalkyl alkylisocyanates such as 1,1-bis-acryloxymethyl ethylisocyanate and reaction products of one molecule of an isocyanurate trimer of diisocyanates with two molecules of a monoester of a dihydroxy compound with an olefinically unsaturated carboxylic acid, particularly hydroxyalkyl (meth)acrylate, or one molecule of a hydroxyalkyl (meth)allyl ether, as well as reaction products of the said trimer with dihydroxy alkyl(meth)allyl ethers such as the mono(meth)allyl ether of a trihydric alcohol, particularly glycerol and trimethylol propane. Useful compounds having two isocyanate groups and one olefinic unsaturation are reaction products of one molecule of an isocyanurate trimer of diisocyanates with one molecule of an hydroxyalkyl (meth)acrylate or of a hydroxyalkyl (meth)allyl ether. Particularly preferred are such unsaturated isocyanates where the olefinic unsaturation is present in the form of an allyl or of a methallyl group.

Emulsifiers **C** which can be used for the present invention can be selected from anionic, cationic, and non-ionic surfactants which are known in the art, particularly preferred being nonionic surfactants that have additional cationic or anionic groups. Mixtures of surfactants may, of course, also be used. Useful surfactants are selected from the group consisting of molecules which have a hydrophobic portion (a) and a hydrophilic portion (b). They may have any of the molecular structure (a)-(b), (a)-(b)-(a), (b)-(a)-(b), etc., where a hyphen indicates a chemical bond between a moiety (a) and a moiety (b). Typically, the hydrophobic moiety can be an alkyl or an alkaryl residue, a poly(propylene-oxy) block, a polydimethylsiloxane block or a fluorocarbon block. The hydrophilic moiety of a non-ionic surfactant is a water soluble non-ionic block, typically a poly(ethylene-oxy) block or a hydroxylated polymer block. The hydrophilic moiety of an anionic surfactant is typically an acid group converted to an anionic group by addition of a base. Typical acid groups are carboxylic acids, sulphonic acids, phosphonic acids and phosphoric acids which form carboxylate ions, sulphonate ions, phosphonate ions and phosphate ions. Typical bases used to ionise the acids are NaOH, KOH, NH₄OH and a variety of tertiary amines, such as triethyl amine, triisopropyl amine, dimethyl ethanol amine, methyl diethanol amine and the like. The anionic surfactants that may be used include, for example, salts of fatty acids, sulphuric acid esters or sulphonates of higher alcohols preferably having from eight to eighteen carbon atoms and alkali metal salts thereof, alkylbenzene sulphonates, alkyl naphthalene sulphonates, a condensation product of naphthalene sulphonic acid and formalin, dialkyl sulphone succinates, alkyl phosphates, and poly(oxyethylene) sulphates. Particularly preferred are, for example, fatty acid salts such as potassium oleate, and a higher alcohol sulphuric acid ester salt such as sodium lauryl sulphate. The cationic surfactants include, for example, alkylamine salts, quaternary ammonium salts, and poly(oxyethylene) alkylamines. Particularly preferred are quaternary ammonium salts such as lauryl trimethyl ammonium chloride or cetyltrimethyl ammonium chloride. Amphoteric surfactants include alkylbetaines such as laurylbetaine and stearylbetaine. The non-ionic surfactants include, for example, poly(oxyethylene)alkyl ethers, poly(oxyethylene) alkylphenol ether, fatty acid esters of sugar alcohols or derivatives thereof such as sorbitan (mixture of dehydration products of sorbitol), poly(oxyethylene) sorbitan fatty acid ester such as poly(oxyethylene) sorbitan monolaurate or monostearate, a polyoxyethylene acryl ester, an (oxyethylene-oxypropylene) block copolymer and a fatty acid monoglyceride.

Emulsifiers that are particularly preferred in the context of the present invention are ethoxylated fatty alcohols or mixtures of two or more of such emulsifiers which are presently available as replacement for ethoxylated nonylphenol.

Another useful type of emulsifiers has been described in WO 2004/094 546 A1 and is a water-soluble alkyd resin which is an esterification product of an alkyd resin Ca and an adduct Cb, which alkyd resin Ca is homogeneously miscible with the alkyd resin A or the urethane alkyd resin **AB** to be emulsified at least in a mass ratio range of Ca to A or Ca to **AB** of from 2 : 98 to 50 : 50, the adduct Cb being the product of an addition reaction of a C₁- to C₄-alkoxypolyethylene glycol Cba and a cycloaliphatic dicarboxylic acid anhydride Cbb in an amount-of-substance ratio of Cba to Cbb of from 0.95 : 1.05 mol/mol to 1.05 : 0.95 mol/mol. These emulsifiers may be used alone, or in mixture with the other emulsifiers detailed supra.

In a preferred embodiment, the aqueous dispersion of the alkyd resin composition **ABC** comprises a mass fraction of from 30 % to 60 % of the urethane alkyd **AB** und from 5 % to 20 % of the emulsifier **C.**

Synthesis of the urethane alkyd resin is preferably conducted in a two-step process, wherein components **A1** to **A4** are esterified in the first step, and the reaction is preferably conducted such that the acid number of the reaction product of the first step is not more than 10 mg/g, particularly preferably not more than 5 mg/g. In the second step, the hydroxyl group containing product of the first step is reacted with the unsaturated isocyanate **B,** optionally in the additional presence of a small amount of a tertiary amine, thereby providing an alkyd resin having olefinically unsaturated groups which are not a part of the fatty acids but are bound to the polymer chain via a urethane group. The amount of isocyanate **B** is chosen such that the amount of substance of isocyanate groups in **B** is lower than the amount of substance of isocyanate-reactive groups in **A,** preferably in a way that the hydroxyl number of the urethane alkyd resin is between 10 mg/g and 80 mg/g. The urethane alkyd resins **AB** of the invention preferably have a value of the Staudinger Index, measured in chloroform as solvent at 23°C, of at least 9 cm³/g, particularly preferred, at least 11 cm³/g. The physical quantity formerly referred to as "limiting viscosity number", properly named "Staudinger-Index" ***J***_{g} according to DIN 1342, part 2.4, is the limiting value of the Staudinger function ***J***ᵥ for decreasing concentration and shear gradient, wherein ***J***ᵥ stands for the relative change in viscosity divided by the mass concentration β_{B}=*m*_{B}/*V* of the solute B (having a mass *m*_{B} of the solute in a volume *V* of the solution), viz., ***J***ᵥ= (ηᵣ -1) / β_{B} . The relative change in viscosity ηᵣ - 1 is calculated as ηᵣ - 1 = (η- ηₛ) /η_{s,}. The relative viscosity ηᵣ is the ratio of the viscosity η of the solution under consideration, and the viscosity ηₛ of the pure solvent. The physical significance of the Staudinger index is that of a specific hydrodynamic volume of the solvated polymer coils at infinite dilution in the state of rest. The unit generally accepted for ***J*** is "cm³/g"; formerly often "dl/g".

The hydroxyl number of the alkyd resins **A** is preferably between 10 mg/g and 100 mg/g, and after reaction with the unsaturated isocyanate **B,** between 5 mg/g and 95 mg/g. The mass fraction of moieties derived from the unsaturated isocyanate in the urethane alkyd resin, calculated as the ratio of the mass of the unsaturated isocyanate to the mass of the urethane alkyd resin, is preferably from 0.1 % to 20 %, particularly preferably, from 0.5 % to 15 %, and especially preferred, between 0.5 % and 10 %.

As has been found in the experiments underlying the present invention, the presence of these additional unsaturation in the modified alkyd resins has led to improved emulsification of the alkyd resin so modified, leading to improved storage stability. Moreover, an improvement in hardness and increased gloss of coating films prepared with coating compositions based on the urethane alkyd resins according to the present invention has been found which was particularly pronounced when the unsaturated group bonded to the alkyd resin chain via a urethane group was derived from allyl or methallyl structure.

Compared to modification of alkyd resins by incorporation of isocyanates without olefinic unsaturation, the urethane alkyd resins according to the present invention do not only exhibit improved emulsification, but show also faster drying as evidenced by tack-free drying time, and to increased hardness and chemical resistance. Unexpectedly, the urethane alkyd resins according to the present invention show the same application properties at lower oil length, compared to urethane alkyd resins known from the prior art, and thereby have higher hardness and faster drying.

A further unexpected finding is that by at least partial polymerisation of the urethane alkyd resins of the present invention in the emulsion form, i. e. combined with the emulsifier C and water as aqueous emulsion, leads to a build-up of the average molar mass which further accelerates the drying process of a coating film prepared therewith, and also increases the chemical and mechanical resistance of the said coating film. This polymerisation is preferably initiated with a redox type radical initiator such as peroxides and hydroperoxides in the presence of an inorganic or organic reducing agent as activator. In this polymerisation, preferably at least a part of the unsaturated groups of the unsaturated fatty acids remains as such and can later be involved in the air drying process.

The invention is further illustrated by the following examples. In these examples, and also in the specification and claims, the following parameters are used:
The hydroxyl number is defined according to DIN EN ISO 4629 (DIN 53 240) as the ratio of the mass of potassium hydroxide ***m***_{KOH} having the same number of hydroxyl groups as the sample, and the mass ***m***_{B} of that sample (mass of solids in the sample for solutions or
dispersions); the customary unit is "mg/g".

Mass fraction w(X) of a substance X in a mixture or solution is the ratio ***m***(X)/***m*** of the mass ***m***(X) of the substance under consideration and the mass ***m*** of the mixture or solution, usually expressed in "%", or "cg/g". In a solution the mass fraction of solute is also referred to as "strength".

Oil length as used herein is the mass fraction of fatty acids in an alkyd resin, usually expressed in "%".

HLB values ("Hydrophilic Lipophilic Balance") as defined in Griffin, J. Soc. Cosmetic Chemists 1, 1949, p. 311, are calculated as HLB = (*M*(h) × 20) / *M*(E), wherein *M*(h) is the molar mass of the hydrophilic part of the emulsifier, and *M*(E) is the molar mass of the emulsifier.

### Examples

### Example 1 Alkyd Resin

470 g of soy bean oil fatty acid, 120 g of para-tert.butylbenzoic acid, 240 g of phthalic acid anhydride, and 240 g of pentaerythritol were heated to 230 °C together with 100 g of xylene. Water formed in the reaction was distilled off as an azeotrope with xylene, and the latter was separated and recycled. When the acid number had reached 5 mg/g after eight hours, the reaction was stopped. The mass fraction of solid resin was adjusted to 80 % by addition of further xylene. The solution had a dynamic viscosity of 3000 mPa·s at 23°C and a shear rate of 100 s⁻¹.

### Example 2 Urethane Alkyd Resin

1000 g of the alkyd resin of Example 1 were diluted by adding 143 g of xylene, and 0.3 g of triethylamine were added. The mixture was heated under stirring to 80°C, and 44 g of an isomer mixture of isopropenyl dimethylbenzylisocyanate were added, whereafter the resulting mixture was heated to 110°C within one hour. The reaction mixture was kept at that temperature for six hours until the mass fraction of free isocyanate groups was reduced to less than 0.01 %. A sample drawn from the reaction mixture yielded a value for the Staudinger index of 10 cm³/g, measured in chloroform at 23°C). Xylene was removed by distillation under reduced pressure at 110 °C until a mass fraction of solids of 99 % was reached. The residue had a dynamic viscosity of 15 Pa·s at 100°C and a shear rate of 10 s⁻¹. A 50 % strength solution of this product in xylene had a dynamic viscosity of 95 mPa·s at 23°C and a shear rate of 100 s⁻¹.

### Example 3 Aqueous Emulsion of a Urethane Alkyd Resin

565 g of the urethane alkyd resin of Example 2 and 5.7 g of an alkylarylsulphonate as anionic emulsifier were mixed at 120°C for one hour. The mixture thus obtained was cooled to 90°C whereafter 45.2 g of an ethoxylated fatty alcohol having a HLB value of 17 in the form of an aqueous solution having a mass fraction of solids of 50 % were added, followed by 290 g of deionised water which were added dropwise over two hours at 80°C. An emulsion was obtained having a mass fraction of solids of 60 %, a dynamic viscosity of 800 mPa·s at 23°C and a shear rate of 10 s⁻¹, and a pH of 5.0 measured on an emulsion which was diluted by addition of further water to a mass fraction of solids of 10 %.

### Comparative Example 4 Aqueous Emulsion of a Urethane Alkyd Resin (AT 412.782 B)

1063 g of the alkyd resin of Example 1 were diluted with 400 g of xylene, and 3 g of triethylamine were added. The mixture was heated to 89°C, and 150 g of an isomer mixture of toluylene diisocyanate were added whereafter the mixture was heated within one hour to 95°C. The reaction mixture was held at that temperature for six hours until the mass fraction of residual isocyanate was below 0.01 %. A sample drawn from the reaction mixture had a Staudinger index of 12 cm³/g, measured in chloroform at 23°C. The reaction product was diluted by addition of xylene to a mass fraction of solids of 55 %. It had a dynamic viscosity of 70 mPa·s, measured at 23 °C and a shear rate of 100 s⁻¹.

### Example 5 Application Testing

Clear coating formulations were prepared from the aqueous urethane alkyd emulsions of examples 3 (Paint 5a) and 4 (Paint 5b, comparative), by mixing 600 g of the urethane alkyd resin emulsions of examples 3 and 4 each with 15.4 g of a siccative (mixed octanoates of cobalt, barium and zirconium), 41 g of butanonoxime (anti-skinning agent) and 9.2 g of a silicon oil solution with a mass fraction of 10 % of silicon oil in xylenic solution.

These clear coating formulations were applied to clean glass plates in a wet film thickness of 80 µm.

Drying time (through-drying) was determined in accordance with ASTM D 5895. König hardness was measured according to DIN EN ISO 7253, after storage of the coated glass plates for 1 week at 23 °C and 20 % relative humidity. Dark yellowing was measured after storage for four weeks in a dark room, and measured on the CIELAB* scale. The following results were found:

**Table 1 Application testing**

| Property | Paint 5a | Paint 5b |
|---|---|---|
| drying time (through-drying) | 3.5 h | 8 h |
| König hardness | 90 s | 50 s |
| dark yellowing Δb | 2 | 2 |

It could be shown that a paint according to the invention (Paint 5a) had faster drying and higher hardness, with no impact on dark yellowing. This improvement could not have been expected from the prior art.

## Claims

1. A water-dilutable alkyd resin composition **ABC,** comprising a urethane alkyd resin **AB** which is a reaction product of a hydroxyl group-containing alkyd resin A and an unsaturated isocyanate **B** wherein the amount of isocyanate **B** is sufficient to consume at least a part of the hydroxyl groups of the alkyd resin **A** under formation of a urethane group, and an emulsifier **C.**

2. The water-dilutable alkyd resin composition **ABC** of claim 1, **characterised in that** the hydroxyl group-containing alkyd resin **A** has a hydroxyl number of from 10 mg/g to 100 mg/g.

3. The water-dilutable alkyd resin composition **ABC** of claim 1 or of claim 2, **characterised in that** the unsaturated isocyanate **B** has at least one isocyanate group and at least one olefinic unsaturation.

4. The water-dilutable alkyd resin composition **ABC** of claim 3, **characterised in that** the unsaturated isocyanate **B** has one isocyanate group and one olefinic unsaturation and is selected from the group consisting of m-isopropenyl dimethylbenzyl isocyanate, o-isopropenyl dimethylbenzyl isocyanate, p-isopropenyl dimethylbenzyl isocyanate, vinyl isocyanate, allyl isocyanate, methallyl isocyanate, and (meth)acryloxyalkyl isocyanates having alkylene groups of from two to 10 carbon atoms.

5. The water-dilutable alkyd resin composition **ABC** of claim 3, **characterised in that** the unsaturated isocyanate **B** has at least one isocyanate group and at least one olefinic unsaturation wherein the olefinic unsaturation is present in the form of an allyl or of a methallyl group.

6. The water-dilutable alkyd resin composition **ABC** of claim 1 or of claim 2, **characterised in that** the alkyd resin **A** comprises moieties derived from at least one unsaturated fatty acid **A1,** moieties derived from at least one aliphatic or aromatic or aromatic-aliphatic monocarboxylic acid **A2,** which are preferably branched, and which are further preferably free from olefinic unsaturation, moieties derived from at least one linear or branched aliphatic, cycloaliphatic or aromatic acids **A3** which have at least two carboxylic acid groups, or anhydrides of these to the extent that these anhydrides exist, which may also have olefinic unsaturation in their molecules, and moieties derived from at least one of at least trihydric alcohols **A4.**

7. The water-dilutable alkyd resin composition **ABC** of any preceding claim, **characterised in that** the emulsifier **C** is selected from the group consisting of anionic, cationic, and non-ionic surfactants, nonionic surfactants that have additional cationic or anionic groups, and mixtures of these.

8. The water-dilutable alkyd resin composition **ABC** of any preceding claim, **characterised in that** the hydroxyl number of the urethane alkyd resin **AB** is from 5 mg/g to 95 mg/g.

9. A process of making a water-dilutable alkyd resin composition **ABC** wherein in the first step, a hydroxyl group-containing alkyd resin **A** is made by reacting at least one unsaturated fatty acid **A1,** at least one aliphatic or aromatic or aromatic-aliphatic monocarboxylic acid **A2,** which are preferably branched, and which are further preferably free from olefinic unsaturation, at least one linear or branched aliphatic, cycloaliphatic or aromatic acid **A3** which has at least two carboxylic acid groups, or anhydrides of these to the extent that these anhydrides exist, which may also have olefinic unsaturation in their molecules, and at least one at least trihydric alcohol **A4,** wherein kind and amount of the educts, or starting materials, **A1** through **A4** are chosen in a way that the resulting alkyd resin **A** has a hydroxyl number of at least 5 mg/g, wherein, in the second step, this hydroxyl group containing alkyd resin **A** is reacted with an unsaturated isocyanate **B,** wherein at least a part of the hydroxyl groups of the alkyd resin **A** is consumed by reaction with the unsaturated isocyanate **B** to form urethane groups, and wherein, in the third step, an aqueous emulsion is formed by mixing the urethane alkyd resin **AB** and at least one emulsifier **C** with water under shear.

10. A method of use of the water-dilutable alkyd resin composition **ABC** to formulate coating compositions, comprising adding a siccative to an aqueous emulsion of the water-dilutable alkyd resin composition **ABC,** and optionally adding further at least one additives, pigments, fillers, biocides, light stabilisers, and colourants.

11. A method of use of the water-dilutable alkyd resin composition **ABC** to coat a substrate, which substrate can be selected from the group consisting of wood, fabricated wood, paper, cardboard, metals, stone, concrete, and plaster.
